# EUROPÄISCHE PATENTSCHRIFT

(11) **EP 0 589 215 B1**
(45) Veröffentlichungstag und Bekanntmachung des Hinweises auf die Patenterteilung: **06.11.1996**
(21) Anmeldenummer: 93113415.9
(22) Anmeldetag: 23.08.1993
(51) Int. Cl.: F01D 25/24

(54) **Gasturbine mit Abgasgehäuse und Abgaskanal**
Gasturbine with exhaust casing and exhaust duct
Turbine à gaz avec carter d'échappement et conduit d'échappement

(30) Priorität: 25.09.1992 DE 4232088
(43) Veröffentlichungstag der Anmeldung: 30.03.1994
(73) Patentinhaber: ASEA BROWN BOVERI AG, CH-5401 Baden (CH)
(72) Erfinder: Matyscak, Kamil, D-79777 Uehlingen-Brenden (DE)
(74) Vertreter: Klein, Ernest

(56) Entgegenhaltungen:
- EP-A- 0 417 433
- GB-A- 646 728

## Beschreibung

### Technisches Gebiet

Die Erfindung betrifft eine axial durchströmte Turbomaschine, insbesondere Gasturbine, bei welcher sich stromabwärts der Austrittslaufschaufeln ein Abgasgehäuse anschliesst, dessen Begrenzungswände im wesentlichen aus einem nabenseitigen ringförmigen Innenteil und einem ringförmigen Aussenteil bestehen, welche einen Diffusor begrenzen und mit einer horizontalen Trennebene versehen sind, und wobei das Abgasgehäuse in einen Abgaskanal übergeht, dessen Begrenzungswände im wesentlichen ebenfalls aus einem nabenseitigen ringförmigen Innenteil und einem ringförmigen Aussenteil bestehen, und wobei die Trennstellen zwischen dem Abgasgehäuse und dem Abgaskanal als Flanschverbindung ausgebildet sind.

### Stand der Technik

Eine derartige Gasturbine, allerdings mit einem topfförmigen Abgasgehäuse ohne horizontale Trennebene, ist bekannt aus der EP-A-0 417 433.

Aus strömungstechnischen Gründen und zur besseren Beeinflussung des Wirkungsgrades werden bei stationären Gasturbinenanlagen relativ lange, sich vorzugsweise in axialer Richtung erstreckende Austrittsdiffusoren vorgesehen. Dadurch ist es erforderlich, das abgasseitige Lager des Turbinenläufers in der Diffusorkonstruktion selbst anzuordnen.

Im instationären Betrieb, wie er beispielsweise bei Kraftwerks-Gasturbinen zur Spitzenlastdeckung häufig vorkommt, treten an den Gehäusen Wärmespannungen und Differenzdehnungen auf, die zu Spieländerungen zwischen Gehäuse und Läufer führen und die auch die Wellenlagerung beenflussen können. Es kann dann zu Beschädigungen der Lager und Stopfbüchsen sowie zu Schaufelhavarien kommen. Insbesondere bei derzeitigen modernen Maschinen mit grossen Dimensionen und hohen Temperaturen werden diese Nachteile in stärkerem Ausmass wirksam.

Bei modernen Maschinen ist der Diffusor nicht mehr selbst am Fundament abgestützt, sondern er ist in das Abgasgehäuse integriert, welches seinerseits am Turbinengehäuse der Turbomaschine angeflanscht ist. Die abgasseitige Wellenlagerung innerhalb des Diffusor-Innenringes befindet sich während des Maschinenbetriebes in einer ausserordentlich heissen Umgebung. Sowohl die Positionierung des Lagers als auch die Aufnahme der üblicherweise vertikalen Last befinden sich in der Diffusorkonstruktion. Es kann sich jedoch infolge der niedrigen Zeitstandfestigkeit der verwendeten Materialien im Laufe der Zeit die ganze Tragstruktur deformieren.

Der einfache Zugang zur Lagerpartie ist demnach von besonderer Wichtigkeit. Selbst wenn man bei einer Maschine der eingangs gennnten Art somit nur Zugang zum Lagerbereich haben will, muss in der Regel die vollständige Abgaspartie demontiert werden. Dies bedeutet, dass zunächst die Schraubverbindungen der Ringflansche am gesamten Umfang zu lösen sind; dass danach ein Element, beispielsweise der Abgaskanal, axial leicht verschoben werden muss, um die vertikalen Flanschflächen beim Ab-und Zudecken nicht zu beschädigen; dass schliesslich die Verschraubungen in der horizontalen Trennebene gelöst werden, worauf die oberen Hälften der Gehäuse abgehoben werden können.

### Darstellung der Erfindung

Die Erfindung versucht diesen Nachteil zu vermeiden und will bei einer Maschine der eingangs genannten Art eine Massnahme schaffen, mit der das axiale Verschieben eines Maschinenteils anlässlich des Abdeckens der Maschine vermieden wird.

Erfindungsgemäss wird dies mit den kennzeichnenden Merkmalen des Patentanspruchs erreicht.

Zwar ist aus der GB-A-646 728 eine Turbomaschine bekannt, bei welcher benachbarte Gehäuse mit schräg verlaufenden Flanschflächen versehen sind. Jedoch wirken diese schrägen Flanschflächen nicht direkt gegeneinander, sondern gegen einen einteiligen, geschlossenen Ring, der die Aufgabe hat, allfällige druck- und temperaturbedingte Deformationskräfte der Gehäuse aufzunehmen. Da ein einteiliger Ring sich in der Regel nur symmetrisch ausdehnt, soll mit dieser Massnahme die Kreisform der Gehäuse auch bei Belastung beibehalten werden.

### Kurze Beschreibung der Zeichnung

In der Zeichnung ist ein Ausführungsbeispiel der Erfindung anhand einer einwelligen axialdurchströmten Gasturbine dargestellt.

Es zeigen:
- Fig. 1: einen Teillängsschnitt der Gasturbine;
- Fig. 2: eine vergrösserte Ansicht des Details X in Fig. 1.

Es sind nur die für das Verständnis der Erfindung wesentlichen Elemente gezeigt. Nicht dargestellt sind von der Anlage beispielsweise der Verdichterteil, die Brennkammer sowie das vollständige Abgasrohr und der Kamin. Die Strömungsrichtung des Arbeitsmittels ist mit Pfeilen bezeichnet.

### Weg zur Ausführung der Erfindung

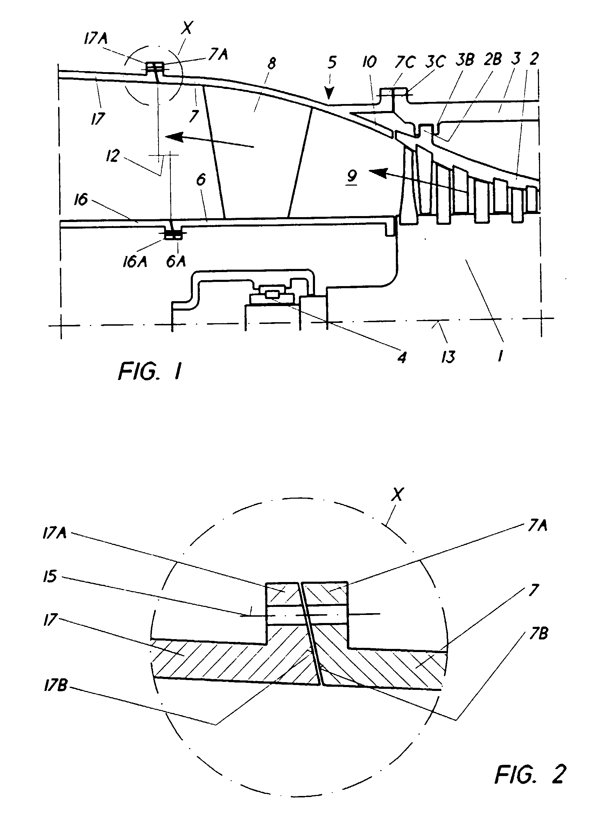

Die Gasturbine, von der in Fig. 1 nur oberhalb der Maschinenachse 13 die Abgasseite und die vier letzten, axialdurchströmten Stufen dargestellt sind, besteht im wesentlichen aus dem mit Laufschaufeln beschaufelten Rotor 1 und dem mit Leitschaufeln bestückten Schaufelträger 2. Der Schaufelträger 2 ist über Vorsprünge 2B in entsprechenden Aufnahmen 3B im Turbinengehäuse 3 eingehängt. An das Turbinengehäuse 3 ist das Abgasgehäuse 5 angeflanscht, welches im wesentlichen aus einem nabenseitigen, ringförmigen Innenteil 6 und einem ringförmigen Aussenteil 7 besteht, welche den Diffusor 9 begrenzen. Beide Elemente 6 und 7 sind in der Regel Halbschalen mit axialer Trennebene. Sie sind miteinander verbunden durch mehrere angeschweisste radiale Strömungsrippen 8, die gleichmässig verteilt über den Umfang angeordnet sind. Der ringförmige Aussenteil 7 ist turbinenseitig mit einer ringförmigen Dichtleiste 10 versehen, welche bündig ist mit der zylinderseitigen Kontur des durchströmten Turbinenkanals. Im Hohlraum innerhalb des Innenteils 6 ist die austrittsseitige Lagerung der Turbomaschine angeordnet, wobei der Rotor 1 in einem Traglager 4 einliegt.

Das Turbinengehäuse 3 und der Schaufelträger 2 sind mit einer in der Maschinenachse 13 liegenden, nicht dargestellten, horizontalen Trennebene versehen. Darin sind die in der Regel mit Flanschen versehenen oberen und unteren Hälften des Turbinengehäuses und des Schaufelträgers miteinander verschraubt.

Das Aussenteil 7 des Abgasgehäuses ist turbinenseitig mit einen Ringflansch 7C versehen. Dieser ist mit einem Ringflansch 3C des Turbinengehäuses 3 gasdicht verschraubt.

Stromabwärts der Strömungsrippen 8 schliesst sich an das Abgasgehäuse 5 ein Abgaskanal an. Dessen Begrenzungswände bestehen aus einem nabenseitigen ringförmigen Innenteil 16 und einem ringförmigen Aussenteil 17. In der Regel handelt es sich bei diesem Abgaskanal um eine einteilige Schweisskonstruktion ohne horizontale Trennung. Die Trennstellen zwischen dem Abgasgehäuse und dem Abgaskanal sind als Flanschverbindung 7A, 17A resp. 6A, 16A ausgebildet.

Gemäss der Erfindung sind die Flansche 7A, 17A resp. 6A, 16A an den Trennstellen mit einer konisch verlaufenden Berührungsfläche 7B, 17B resp. 6B, 16B versehen. Die Konizität verläuft dabei in der Richtung, dass nach dem Lösen der in Fig. 2 lediglich durch ihre Mittellinien 15 angedeuteuten Flanschverschraubungen die obere Hälfte des Abgasgehäuses 5 abgehoben werden kann, ohne dass der Abgaskanal 16, 17 bewegt werden muss. Hierzu müssen lediglich die beidseitigen Flanschschrauben 7A, 7C resp 6A der oberen Hälfte des Abgasgehäuses 5 entfernt werden. Auch müssen nur die Verschraubungen in der horizontalen Trennebene des Abgasgehäuses allein gelöst werden. Schon beim geringsten Anheben dessen Oberteils, welches hier aus den Teilen 7, 6 und 8 besteht, ergibt sich zwischen den konischen Berührungsflächen im Flanschbereich ein Spalt, welcher ein beschädigungsfreies Handhaben ermöglicht.

Um das problemlose Abheben des Abgasgehäuses zu gewährleisten, befinden sich die Ringflansche 7A, 17A resp. 6A, 16A nicht in der gleichen Vertikalebene. Die Flansche 7A, 17A der Aussenteile 7 und 17 sind stromabwärts um das Mass 12 axial gegen die Ringflansche 6A, 16A verschoben.

Selbstverständlich ist die Erfindung nicht auf das beschriebene Ausführungsbeispiel beschränkt. Für den nicht dargestellten Fall, dass der Diffusor ein eigenes Gehäuse aufweisen sollte, welches im Abgasgehäuse geführt ist, werden mit Vorteil auch dessen an den Abgaskanal angrenzenden Trennflansche mit der neuen Massnahme ausgerüstet.

### Bezugszeichenliste

- 1: Rotor
- 2: Schaufelträger
- 2B: Vorsprung
- 3: Turbinengehäuse
- 3B: Aufnahme
- 3C: Ringflansch
- 4: Traglager
- 5: Abgasgehäuse
- 6: Innenteil vom Abgasgehäuse
- 6A: Ringflansch
- 7: Aussenteil vom Abgasgehäuse
- 7A: Ringflansch
- 7C: Ringflansch
- 7B: Berührungsfläche
- 8: Strömungsrippen
- 9: Diffusor
- 10: Dichtleiste
- 12: axialer Abstand
- 13: Maschinenachse
- 15: Mittellinie der Flanschverschraubung
- 16: Innenteil vom Abgaskanal
- 16A: Ringflansch
- 17: Aussenteil vom Abgaskanal
- 17A: Ringflansch
- 17B: Berührungsfläche

## Patentansprüche

1. Axial durchströmte Turbomaschine, insbesondere Gasturbine, bei welcher sich stromabwärts der Austrittslaufschaufeln ein Abgasgehäuse (5) anschliesst, dessen Begrenzungswände im wesentlichen aus einem nabenseitigen ringförmigen Innenteil (6) und einem ringförmigen Aussenteil (7) bestehen, welche einen Diffusor (9) begrenzen und mit einer horizontalen Trennebene versehen sind, und wobei das Abgasgehäuse in einen Abgaskanal übergeht, dessen Begrenzungswände im wesentlichen ebenfalls aus einem nabenseitigen ringförmigen Innenteil (16) und einem ringförmigen Aussenteil (17) bestehen, und wobei die Trennstellen zwischen dem Abgasgehäuse und dem Abgaskanal als Flanschverbindung (7A, 17A resp. 6A, 16A) ausgebildet sind,
dadurch gekennzeichnet,
dass die Flansche (7A, 17A resp. 6A, 16A) an den Trennstellen zwischen dem Abgasgehäuse und dem Abgaskanal eine konisch verlaufende Berührungsfläche (7B, 17B) aufweisen,
und dass die radial aussenliegenden Flansche (7A, 17A) und die radial innenliegenden Flansche (6A, 16A) sich nicht in der gleichen Vertikalebene befinden, wobei die aussenliegenden Flansche (7A, 17A) gegenüber den innenliegenden Flanschen (6A, 16A) stromabwärts verschoben sind.

## Claims

1. Axial flow turbomachine, in particular a gas turbine, in which the outlet rotor blades are followed downstream by an exhaust gas casing (5), whose boundary walls consist essentially of a ring-shaped hub-end inner part (6) and a ring-shaped outer part (7) which bound a diffuser (9) and are provided with a horizontal split plane, and in which the exhaust gas casing merges into an exhaust gas duct, whose boundary walls likewise consist essentially of a ring-shaped hub-end inner part (16) and a ring-shaped outer part (17), and in which the split locations between the exhaust gas casing and the exhaust gas duct are configured as a flange connection (7A, 17A resp. 6A, 16A), characterized in that the flanges (7A, 17A resp. 6A, 16A) at the split locations between the exhaust gas casing and the exhaust gas duct have a conically extending contact surface (7B, 17B), and in that the radially outer flanges (7A, 17A) and the radially inner flanges (6A, 16A) are not located in the same vertical plane, the outer flanges (7A, 17A) being displaced downstream of the inner flanges (6A, 16A).

## Revendications

1. Turbomachine à écoulement axial, en particulier turbine à gaz, dans laquelle, à l'aval des aubes mobiles de sortie, se raccorde un carter d'échappement (5), dont les parois de délimitation se composent essentiellement d'une pièce intérieure annulaire (6) du côté du moyeu et d'une pièce extérieure annulaire (7), qui délimitent un diffuseur (9) et sont pourvues d'un plan de séparation horizontal, et dans laquelle le carter d'échappement se transforme en un conduit d'échappement, dont les parois de délimitation se composent aussi essentiellement d'une pièce intérieure annulaire (16) du côté du moyeu et d'une pièce extérieure annulaire (17), et dans laquelle les zones de séparation entre le carter d'échappement et le conduit d'échappement sont constituées par des assemblages à brides (7A, 17A respectivement 6A, 16A), caractérisée en ce que les brides (7A, 17A respectivement 6A, 16A) présentent, dans les zones de séparation entre le carter d'échappement et le conduit d'échappement, une face de contact à orientation conique (7B, 17B), et en ce que les brides radialement extérieures (7A, 17A) et les brides radialement intérieures (6A, 16A) ne se trouvent pas dans le même plan vertical, les brides extérieures (7A, 17A) étant décalées vers l'aval par rapport aux brides intérieures (6A, 16A).
